# EUROPÄISCHE PATENTSCHRIFT

(11) **EP 2 028 105 B1**
(45) Veröffentlichungstag und Bekanntmachung des Hinweises auf die Patenterteilung: **03.03.2010**
(21) Anmeldenummer: 08012620.4
(22) Anmeldetag: 11.07.2008
(51) Int. Cl.: B64G 1/40

(54) **Verfahren zum Befüllen von Tanks von Flugkörpern der Luft- und Raumfahrt**
Method for filling tanks of air- and spacecraft
Procédé de remplissage des réservoirs des aéronef et véhicules spatials

(30) Priorität: 21.08.2007 DE 102007039456; 13.09.2007 DE 102007043684
(43) Veröffentlichungstag der Anmeldung: 25.02.2009
(73) Patentinhaber: MT Aerospace AG, 86153 Augsburg (DE)
(72) Erfinder: Friedel, Josef, Dr., 86405 Meitingen (DE)
(74) Vertreter: Grape & Schwarzensteiner

(56) Entgegenhaltungen:
- US-A- 3 097 766

## Beschreibung

Die vorliegende Erfindung betrifft ein Verfahren zum Befüllen von Tanks von Flugkörpern der Luft- und Raumfahrt, insbesondere von Raumflugkörpern, mit Treibstoff oder Oxidator für deren Antriebs- und Lageregelsysteme.

Flugkörper, wie Raketen oder künstliche Himmelskörper, "Satelliten", benötigen für Manöver zur Erreichung und Einhaltung ihrer vorgesehenen Bahnen mitgeführten Treibstoff und Oxidator bzw. Oxidationsmittel. Diese beiden Stoffe werden in flüssiger Form in separaten dafür vorgesehenen, mit Gas, beispielsweise Helium, bedrückten, d.h. mit Druck beaufschlagten, Tanks mitgeführt. Die Tanks umfassen dem Fachmann bekannte sogenannte PMDs, welche durch die Oberflächenspannung von Flüssigkeiten funktionieren. Treibstoff und Oxidator werden gewöhnlich durch diese PMDs (Propellant-Management-Devices) während ihrer Entnahme aus dem Tank vom Bedrückungsgas, beispielsweise Helium, getrennt und möglichst frei von Gasblasen den Antriebs- und Lageregelungssystemen des Raumflugkörpers, insbesondere Satelliten, zugeführt.

Die US-PS 3,097,766 beschreibt speziell ausgestaltete Tanks für Treibstoff und Oxidationsmittel zur Verwendung für Raketen und deren Befüllung. In herkömmlicher Weise werden die Behälter zunächst mit einem Inertgas, wie Stickstoff, befüllt und das Gas wird dann durch das flüssige Oxidationsmittel bzw. den Treibstoff ersetzt. Danach werden die Behälter luftdicht verschlossen.

Ein wesentliches Problem bei der Konzeption und konstruktiven Gestaltung von Tanks und PMDs ist die Tatsache, dass bei einer Befüllung der Tanks mit Treibstoff oder Oxidator vor dem Start, trotz großer Sorgfalt und strikter Kontrolle des Befüllungsprozesses, eine Gasblase der vorher unvermeidbar im Tank befindlichen Atmosphäre, die aus der vorherigen Endmontage der Tanks, damit durchgeführter Tests und ihrer Zwischenlagerung resultiert, auf der Treibstoffauslassseite verbleibt. Es handelt sich dabei im Wesentlichen um Schutzgas, was in Treibstoff oder Oxidator unlöslich ist. Diese Gasblase befindet sich hinter den funktional relevanten Komponenten des PMD und kann nicht mehr vom Treibstoff oder Oxidator getrennt werden. Diese Gasblase wird dann durch die Entnahme von Treibstoff oder Oxidator aus den Tanks in die Antriebs- und Lageregelungssysteme gespült, sobald der Raumflugkörper im Orbit angekommen ist und die Antriebs- und Lageregelsysteme in Betrieb genommen werden. Diese Gasblase kann Fehlfunktionen oder sogar Schäden an diesen Systemen und damit am Raumflugkörper, insbesondere einem Satelliten, hervorzurufen, wenn bestimmte technisch verträgliche Maximalmengen des Gases überschritten werden.

Aufgabe der vorliegenden Erfindung ist es daher, ein Verfahren zum Befüllen von Tanks von Flugkörpern für die Luft- und Raumfahrt zur Verfügung zu stellen, bei dem dieser gravierende Nachteil herkömmlicher Befüllungsverfahren vermieden werden kann. Insbesondere soll vermieden werden, dass beim Befüllen der Tanks eine Gasblase auf der Treibstoff- bzw. Oxidatorauslassseite der Tanks entsteht und verbleibt. Das Verfahren soll insbesondere zum Befüllen von Satellitentanks ausgelegt sein.

Gegenstand der vorliegenden Erfindung ist ein Verfahren zum Befüllen von Tanks von Flugkörpern der Luft- und Raumfahrt mit Treibstoff oder Oxidator für deren Antriebs- und Lageregelsysteme, wobei sich das Verfahren dadurch auszeichnet, dass man vor dem Befüllen der Tanks mit Treibstoff oder Oxidator, diese Tanks mit einem in dem Treibstoff oder Oxidator löslichen Gas spült, bis eine vorher in den Tanks verbliebene Atmosphäre vollständig verdrängt ist.

Durch diese Maßnahme verbleibt auf der Treibstoff- bzw. Oxidatorauslassseite der Tanks allenfalls eine Gasblase, die aus dem in dem Treibstoff oder Oxidator löslichen Spülgas, anstatt wie bisher aus dem in dem Treibstoff oder Oxidator nur unbedeutend löslichen Atmosphärengas, respektive Schutzgas, besteht. Dementsprechend wird sich diese Gasblase in der Folgezeit im Treibstoff oder Oxidator auflösen, oder gegebenenfalls in diese diffundieren. Das auf der Gas-Bedrückungsseite gegenüber der Treibstoff- bzw. Oxidatorauslassseite der Tanks, befindliche Volumen an Spülgas, wird durch den beim Befüllen nachfließenden Treibstoff bzw. Oxidator verdrängt und kann bis auf ein bedeutungsloses Restvolumen gasseitig aus dem Tank entweichen.

Bevorzugte Ausführungsformen der vorliegenden Erfindung sind in den Unteransprüchen 2 bis 5 angegeben.

So ist das gewählte Spülgas vorzugsweise ein Bestandteil des einzufüllenden Treibstoffs oder Oxidators. Das Spülgas ist dadurch in geeigneter Weise auf den Treibstoff oder Oxidator abgestimmt, so dass seine Absorption bzw. Lösung optimal sicher gestellt ist.

Bei einer weiteren bevorzugten Ausführungsform der Erfindung ist das gewählte Spülgas ein Wirkbestandteil des einzufüllenden Treibstoffs oder Oxidators, d.h. es kann Treibstoff- oder Oxidatorkomponente sein, so dass wieder eine Absorption bzw. Lösung optimal sicher gestellt ist und die Treibstoffeigenschaften nicht nachteilig beeinflusst werden.

Vorzugsweise wird als ein Spülgas für einen Treibstofftank Ammoniakgas (NH₃) und für den Oxidatortank Stickstoffmonoxid (NO) verwendet, insbesondere wenn der einzufüllende Treibstoff auf Hydrazin und der einzufüllende Oxidator auf einem Distickstofftetroxid basiert, da dann eine maximal mögliche Abstimmung des Spülgases auf den Treibstoff bzw. Oxidator gewährleistet ist und die Treibstoffeigenschaften nicht nachteilig beeinflusst werden.

Nach dem Spülen werden die Tanks des Raumflugkörpers, insbesondere Satelliten, entsprechend der für die Antriebs- und Lageregelungssysteme geltenden Prozeduren mit Treibstoff und Oxidator befüllt.

Nach dem Befüllen mit Treibstoff oder Oxidator werden die Tanks entsprechend der für die Antriebs- und Lageregelungssysteme geltenden Prozeduren mit Bedrückungsgas, beispielsweise Helium, befüllt.

Dabei wird das Restvolumen an Spülgas über der Oberfläche der Flüssigkeit (Treibstoff oder Oxidator) komprimiert, mit Bedrückungsgas gemischt und in der Folgezeit in der Flüssigkeit gelöst.

Der Erfindungsgedanke wird nachfolgend anhand eines ausgewählten Beispiels erläutert:

### Beispiel:

### Abstimmung des Spülgases auf den Treibstoff:

Gebräuchliche (flüssige) Treibstoffe für die Antriebs- und Lageregelsysteme für Raumflugkörper sind Alkohol, Benzin, Kerosin, aber insbesondere Hydrazin (N₂H₄) und dessen Derivate, wie Monomethylhydrazin (MMH) sowie symmetrisches Dimethylhydrazin (SDMH) oder unsymmetrisches Dimethylhydrazin (UDMH). Anwendung finden auch Aerozin 50 (50% UDMH, 50% Hydrazin), UH 25 (75% UDMH, 25% Hydrazin).

Die Qualität für MMH wird beispielsweise durch MIL-P-27404 spezifiziert. Damit besitzt MMH eine Dichte von ca. 0,88 g/cm³ bei 16°C. Die geforderte Reinheit beträgt ca. 98,5%, wobei der Rest im Wesentlichen durch Wasser H₂O und Ammoniak NH₃ gebildet ist.

Da Ammoniak als Ausgangsstoff für die technische Synthese von Hydrazin verwendet wird und ohnehin als wesentliche Verunreinigung in Hydrazin vorkommt, wird erfindungsgemäß Ammoniak als ein mögliches Spülgas für den Treibstofftank vorgeschlagen.

Der Treibstofftank wird typischerweise zu 95% seines Nominalvolumens mit Treibstoff befüllt. Danach enthält jeweils 1 Liter Volumen etwa 840 g MMH und etwa 0,04 g Ammoniak aus dem Spülgas. Wird diese Menge an Ammoniak im MMH gelöst, erhöht sich der Anteil im Treibstoff um weniger als etwa 50 ppm, was bedeutungslos gegenüber einem zulässigen Gehalt von 1,5 % an Fremdstoffen ist.

### Abstimmung des Spülgases auf Oxidator:

Gebräuchliche Oxidatoren sind Distickstofftetroxid (N₂O₄) und Mischungen davon, wie MON-1 und MON-3, denen 1% bzw. 3% Stickstoffmonoxid (NO) in gelöster Form zugesetzt wurde.

Die Qualität wird beispielsweise durch MIL-PRF-26539 spezifiziert. Danach besitzt MON-3 eine Dichte von etwa 1,45 g/cm³ bei 16°C. Da Stickstoffmonoxid NO ohnehin als technisch nötiger Zuschlagstoff in einer Menge von mehr als 1% im Oxidator vorliegt, wird erfindungsgemäß NO als ein mögliches Spülgas für den Oxidatortank vorgeschlagen.

Der Oxidatortank wird typischerweise zu 95% seines Nominalvolumens mit Flüssigkeit befüllt. Damit enthält jeweils 1 Liter Volumen etwa 1,450 kg MON-3 und etwa 0,07 g NO. Wird diese Menge an NO im MON-3 gelöst, erhöht sich der Anteil um weniger als etwa 50 ppm, was bedeutungslos gegenüber einem angestrebten Gehalt von 3% an NO ist.

Die hier vorgeschlagenen Spülgase Ammoniak und Stickstoffmonoxid dienen lediglich zur Spezifizierung der Erfindung, sollen diese aber in keiner Weise beschränken. Wesentlich ist, dass sich die verwendeten Spülgase in dem Treibstoff oder Oxidator lösen, damit sich beim Befüllen der Tanks keine dauerhafte Blase an der Treibstoffauslassseite bilden kann.

Zusammenfassend ist festzustellen, dass die wesentlichen Vorteile eines entsprechend der Erfindung befüllten Treibstoff- oder Oxidatortanks, insbesondere von Satelliten, im Vergleich zu nach dem Stand der Technik befüllten Tanks, die folgenden sind:
1.) Bei nach der Erfindung befüllten Tanks existiert spätestens nach einer gewissen Wartezeit keine Gasblase treibstoffauslassseitig vor dem PMD.
2.) Bei nach der Erfindung befüllten Tanks befindet sich eine bedeutungslose Menge an Spülgas chemisch gelöst im Treibstoff bzw. Oxidator.
3.) Bei nach der Erfindung befüllten Tanks können keine Fehlfunktionen oder Schäden an den Antriebs- und Lageregelsystemen bei deren Inbetriebnahme auftreten, die durch Gasblasen im Treibstoff verursacht werden.

## Patentansprüche

1. Verfahren zum Befüllen von Tanks von Flugkörpern der Luft- und Raumfahrt mit Treibstoff oder Oxidator für deren Antriebs- und Lageregelsysteme, **dadurch gekennzeichnet, dass** man vor dem Befüllen der Tanks mit Treibstoff oder Oxidator, diese Tanks mit einem in dem Treibstoff oder Oxidator löslichen Gas spült, bis eine vorher in den Tanks verbliebene Atmosphäre vollständig verdrängt ist.

2. Verfahren nach Anspruch 1, **dadurch gekennzeichnet, dass** das gewählte Spülgas ein Bestandteil des einzufüllenden Treibstoffs oder Oxidators ist.

3. Verfahren nach Anspruch 2, **dadurch gekennzeichnet, dass** das gewählte Spülgas ein Wirkbestandteil des einzufüllenden Treibstoffs oder Oxidators ist.

4. Verfahren nach den Ansprüchen 1 bis 3, **dadurch gekennzeichnet, dass** als Spülgas für den Treibstofftank Ammoniak (NH₃) verwendet wird.

5. Verfahren nach Ansprüchen 1 bis 3, **dadurch gekennzeichnet, dass** als Spülgas für den Oxidatortank Stickstoffmonoxid NO verwendet wird.

## Claims

1. Method for charging tanks of aerospace missiles with propellant or oxidant for their driving and position control systems, **characterized in that** before charging the tanks with propellant and oxidant these tanks are flushed with a gas being soluble in the propellant or oxidant until an atmosphere previously kept in the tanks is completely eliminated.

2. Method according to claim 1, **characterized in that** the selected flushing gas is a component of the propellant or oxidant to be charged.

3. Method according to claim 2, **characterized in that** the selected flushing gas is an active component of the propellant or oxidant to be charged.

4. Method according to claims 1 to 3, **characterized in that** ammonia (NH₃) is used as the flushing gas for the propellant tank.

5. Method according to claims 1 to 3, **characterized in that** nitric oxide (NO) is used as the flushing gas for the oxidant tank.

## Revendications

1. Procédé pour le remplissage de réservoirs d'aéronefs ou de véhicules spatiaux avec un carburant ou un oxydant pour leurs systèmes d'entraînement et de régulation de position, **caractérisé en ce que,** avant le remplissage des réservoirs avec le carburant ou l'oxydant, ces réservoirs sont rincés avec un gaz soluble dans le carburant ou l'oxydant, jusqu'à ce qu'une atmosphère auparavant restée dans les réservoirs soit complètement évacuée.

2. Procédé selon la revendication 1, **caractérisé en ce que** le gaz de rinçage choisi est un élément constitutif du carburant ou de l'oxydant qu'il s'agit de remplir.

3. Procédé selon la revendication 2, **caractérisé en ce que** le gaz de rinçage choisi est un élément constitutif actif du carburant ou de l'oxydant qu'il s'agit de remplir.

4. Procédé selon les revendications 1 à 3, **caractérisé en ce que** l'on utilise de l'ammoniac (NH₃) à titré de gaz de rinçage pour le réservoir de carburant.

5. Procédé selon les revendications 1 à 3, **caractérisé en ce que** l'on utilise du monoxyde d'azote (NO) à titre de gaz de rinçage pour le réservoir d'oxydant.
